# EUROPÄISCHE PATENTSCHRIFT

(11) **EP 2 766 284 B1**
(45) Veröffentlichungstag und Bekanntmachung des Hinweises auf die Patenterteilung: **30.11.2016**
(21) Anmeldenummer: 12775433.1
(22) Anmeldetag: 12.09.2012
(51) Int. Cl.: B65G 1/04

(54) **BEWEGUNGSVORRICHTUNG FÜR TRANSPORTEINHEITEN**
MOVING DEVICE FOR TRANSPORT UNITS
APPAREILAGE DE DÉPLACEMENT POUR UNITES DE TRANSPORT

(30) Priorität: 28.09.2011 DE 102011115076
(43) Veröffentlichungstag der Anmeldung: 20.08.2014
(73) Patentinhaber: FAB GmbH Fördertechnik und Anlagenbau, 79761 Waldshut-Tiengen (DE)
(72) Erfinder: MÜLLER, Anton, 79774 Albbruck-Birndorf (DE); LENART, Lutz, 79837 St. Blasien (DE); LINSEL, Peter, 76135 Karlsruhe (DE); BAUR, Tobias, 76135 Karlsruhe (DE)
(74) Vertreter: Drobnik, Stefanie
(86) Internationale Anmeldenummer: PCT/DE2012/000907
(87) Internationale Veröffentlichungsnummer: WO 2013/044895

(56) Entgegenhaltungen:
- EP-A2- 0 609 757
- WO-A1-2008/136659
- DE-A1- 19 626 966
- US-A- 5 615 992
- US-A1- 2004 197 172

## Beschreibung

Die Erfindung betrifft eine Lagereinrichtung zum Lagern einer Mehrzahl von Transporteinheiten auf Lagerplätzen unter Verwendung einer Bewegungsvorrichtung.

Zum horizontalen, kontrollierten Bewegen von Transporteinheiten in Lagereinrichtungen oder in Förderlinien werden unterschiedliche Förderelemente eingesetzt, beispielsweise Rollenförderer, Tragprofilförderer, Kettenförderer etc. Unter Transporteinheiten sind dabei Behältnisse im allgemeinsten Sinne zu verstehen, welche zur Aufnahme von Waren im allgemeinsten Sinne dienen. Bei diesen Transporteinheiten kann es sich beispielsweise um Container handeln, welche in der Luftfracht eingesetzt werden.

Ein Problem besteht darin, Transporteinheiten mit entsprechenden Vorrichtungen bewegen zu können, die unter Einhaltung der Normen hinsichtlich Fläche und Gewicht der Transporteinheit optimal angepaßt sind. Dies gilt insbesondere für größere Transporteinheiten.

Die DE 93 01 506 U1 zeigt ein Hochregallager für Container unter Verwendung eines Transportwagens der eingangs angegebenen Art. Dieser Transportwagen besitzt an seinen beiden Längsseiten jeweils Laufrollen, welche auf Schienen laufen, die in Längsrichtung angeordnet und an den Regalmodulen des Hochregallagers befestigt sind. Auf dem Transportwagen sind weiterhin Transporttische angeordnet, die in Querrichtung zum Transportwagen horizontal bewegbar sind. Zu diesem Zweck besitzt jeder der Transporttische an seinen Längsseiten, also in Querrichtung zum Transportwagen, jeweils vier Laufrollen, welche auf Querschienen laufen, die in Querrichtung auf dem Transportwagen angeordnet sind. Der Antrieb der Transporttische erfolgt über einen Zahnstangenantrieb. Auf jedem der Transporttische ist schließlich eine Ladebühne angeordnet. Diese Ladebühnen sind durch an den Transporttischen angeordnete Hubvorrichtung um einen vorgegebenen Höhenbetrag anhebbar und absenkbar. Innerhalb der Regalmodule sind in vorgegebenen Abständen Querschienen angeordnet, welche die gleiche Spurweite aufweisen und sich auf der gleichen Höhe befinden wie die Querschienen der Transportwagen. Der auf den Transporttischen des Transportwagens abgesetzte Container kann durch eine Querbewegung der Transporttische in das Regalmodul eingeschoben werden. Wenn der Container ganz eingeschoben ist, werden die Ladebühnen der Transporttische abgesenkt und der Container auf das entsprechende Auflager aufgesetzt.

Die EP-A-0 609 757 offenbart ein Kanallager zum Ein- und Auslagern von kisten- und plattenförmigem Gut. Ein Transportfahrzeug weist eine Transportplattform mit Rollen und ein Satelittenfahrzeug mit oberseitiger Hubplattform auf. Auf einer Beladestation befindliches gut wird auf die Transportplattform des Transferfahrzeugs aufgeschoben und die Hubplattform betätig, so dass das Gut darauf aufliegt. Das Satelittenfahrzeug wird in einem U-förmigen Kanal verfahren, das Gut abgesetzt und das Satelittenfahrzeug zurück an seine Ausgangsposition verfahren.

Der Erfindung liegt die Aufgabe zugrunde, eine Lagereinrichtung zum Lagern einer Mehrzahl von Transporteinheiten zu schaffen, worin unter Einhaltung der Normen hinsichtlich Fläche und Gewicht auch größere Transporteinheiten problemlos bewegt und gelagert werden können.

Die technische Lösung ist gekennzeichnet durch eine Lagereinrichtung mit den Merkmalen des Anspruchs 1.

Eine Lagereinrichtung zum Lagern einer Mehrzahl von Transporteinheiten auf Lagerplätzen verwendet ein Shuttlesystem.

Dadurch ist eine Lagereinrichtung unter Verwendung des vorbeschriebenen Shuttlesystems geschaffen, welches sehr effizient arbeitet und sich durch eine hohe Umschlagleistung auch in Zeiten hoher Belastung auszeichnet. Denn das Shuttlesystem ist zum effizienten Bewegen von Transporteinheiten gerade in derartigen Lagereinrichtungen zum Lagern einer Mehrzahl von Transporteinheiten auf Lagerplätzen prädestiniert. Der Kern liegt somit bei der erfindungsgemäßen Lagereinrichtung in dem Einsatz von zwei oder mehr Shuttles zum Bewegen der entsprechenden Transporteinheiten. Mittels des Shuttlesystems ist es innerhalb der Lagereinrichtung möglich, die Transporteinheiten direkt an einen Förderer zu übergeben. Damit werden die Ein- und Auslagerzeiten im Hochregallager wesentlich minimiert, und die Umschlagleistung kann in Zeiten hoher Belastung mehr als verdoppelt werden. Das Shuttlesystem dient dabei innerhalb der Lagereinrichtung zum Fördern, Heben, Einlagern, Transportieren und Auslagern von insbesondere großen Transporteinheiten mit mehreren, mechanisch nicht verbundenen Shuttles, welches das Shuttlesystem definieren. Die Übergabestellen der Lagereinrichtung können durch Rollenförderer definiert sein. Diese können eine Förderrichtung quer zur Fahrtrichtung der Shuttles definieren. Innerhalb der Lagereinrichtung besteht die Möglichkeit, dass die Shuttles die Transporteinheiten unterfahren, welche zunächst auf einem Förderer beispielsweise mit Förderrollen steht. Auch kann eine Durchfahrmöglichkeit für die Shuttles innerhalb der Lagereinrichtung möglich sein. Der Verfahrwagen, welcher die Shuttles aufnimmt, ist dabei quer zur Fahrtrichtung der Shuttles verfahrbar.

Eine Weiterbildung schlägt eine bezüglich der Verfahrbahn für den Verfahrwagen querverlaufende Förderbahn für die Transporteinheiten vor. Diese querverlaufende Förderbahn weist insbesondere auch eine Übergabestelle zur Aufnahme der Transporteinheiten in die erfindungsgemäße Lagereinrichtung auf.

Auch sind die Lagerplätze zumindest teilweise von Förderbahnen beispielsweise in Form von Rollenförderern mit Eckumsätzern umgeben sind. Auf diesen umlaufenden Förderbahnen sind die Transporteinheiten verfahrbar. Der Vorteil ist, dass die auf den Lagerplätzen zu positionierenden Transporteinheiten nicht nur von der Verfahrbahn für den Verfahrwagen aus entsprechend positioniert werden können, sondern dass die Transporteinheiten auch über die Förderbahnen zugeführt werden können. Dies bedeutet, dass die auf einem Lagerplatz zu positionierende Transporteinheit der Förderbahn aufgegeben wird. Es wird anschließend der Verfahrwagen mit seinen Shuttles entsprechend positioniert, so dass dann die Shuttles hin zu der Transporteinheit auf der Förderbahn verfahren werden, von wo aus sie die Transporteinheit auf den entsprechenden Lagerplatz bewegen.

Der wesentliche Kerngedanke bei dieser Lagereinrichtung besteht somit darin, dass die Shuttles in einem gemeinsamen Verfahrwagen integriert sind. Dies bedeutet, dass der Verfahrwagen die Shuttles dort hinfährt, wo die Shuttles in einer hierzu senkrechten Verfahrrichtung eingesetzt werden sollen, um die Transporteinheit von einer ersten Position zu einer zweiten Position zu verfahren. Nachdem die Shuttles die Transporteinheit versetzt haben, kehren sie wieder zu dem Verfahrwagen zurück, von wo aus sie nach Verfahren des Verfahrwagens in einer neuen Position für eine neue Aufgabe eingesetzt werden können. Dieses Lagersystem zeichnet sich durch eine hohe Verfügbarkeit durch Redundanz aus. Es ist insbesondere durch Hinzufügen von Lagerplätzen und Vertikalförderern hinsichtlich seiner Kapazität sehr flexibel. Gleiches gilt auch für den Durchsatz durch Hinzufügen von entsprechenden Shuttlesystemen. Die erfindungsgemäße Lagereinrichtung ermöglicht auch Pufferzonen, Kurzlagerzonen sowie Langzeitlagerzonen.

Vorzugsweise weist der Verfahrwagen U-förmige Fahrrinnen auf, in welchen die Shuttles angeordnet und verfahrbar sind. Dies bedeutet, dass die Shuttles voll in dem Verfahrwagen integriert sind, indem dieser mehrere Fahrrinnen mit entsprechender Spurbreite der Shuttles aufweist. Die Fahrrinnen sind dabei durch Stege voneinander getrennt. Diese Stege dienen als Auflagerfläche zum Tragen der Transporteinheiten. Die Shuttles schließen dabei vorzugsweise bündig mit der Oberseite der Fahrrinne ab.

Vorzugsweise ist die Versorgung mit Energie sowie die Steuerung der Shuttles durch den Verfahrwagen durchführbar. Dies bedeutet, dass in dem Verfahrwagen die Shuttles nicht nur integriert sind, sondern dass der Verfahrwagen auch die Versorgung der Shuttles übernimmt.

Eine weitere bevorzugte Weiterbildung schlägt vor, dass die Lagereinrichtung mehrere Ebenen aufweist, welche über einen oder mehrere Vertikalförderer miteinander verbunden sind. Dadurch ist ein Hochregallager geschaffen. Dabei sind die unterschiedlichen Ebenen hinsichtlich der Grundkonzeption mit den Shuttles, welche in dem Verfahrwagen integriert sind und auf der Verfahrbahn verfahrbar sind, identisch. Dennoch kann es von der Logistik her Unterschiede geben. Beispielsweise kann eine Ebene als Ebene für einen schnellen Umsatz ausgebildet sein (indem sie die vorbeschriebene umlaufende Förderbahn aufweist). Eine andere Ebene kann auf diese umlaufende Förderbahn verzichten. Dadurch können Langzeitlagerzonen definiert sein. Somit kann das Shuttlesystem auch zur mehrfachtiefen Einlagerung in Hochregallager eingesetzt werden. Dies führt zu einer wesentlichen Erhöhung der Lagerdichte. Das Ein- und Auslagern in einem derartigen Hochregallager und die damit verbundene sehr hohe Erhöhung in der Umschlagleistung sowie die Redundanz ist durch die Möglichkeit des Ebenenwechsels des gesamten Systems aus Verfahrwagen und Shuttles gewährleistet. Die Antriebstechnik auf den Lagerplätzen dieses Regallagers entfällt dabei. Es ist dabei wesentlich weniger Energieaufwand notwendig, da die Eigenlast gegenüber einem Regalbediengerät wesentlich geringer ist. Wie bereits ausgeführt, kann durch entsprechende Kurzzeitlagerplätze auf einer bestimmten Ebene hohe Durchsätze für die Transporteinheiten geschaffen werden.

Die Grundidee einer Vorrichtung zum Bewegen von Transporteinheiten von einer ersten Position zu einer zweiten Position besteht darin, dass wenigstens ein Shuttle vorgesehen ist. Bei diesem Shuttle handelt es sich dem Grund nach um einen länglichen Verfahrwagen, welcher sich durch ein eigenes Fahrgestell sowie durch eine oder mehrere Koppeleinrichtungen für die zu bewegenden Transporteinheiten auszeichnet. Die Koppeleinrichtung ist dabei im allgemeinsten Sinne zu verstehen. Sie schafft eine wie auch immer geartete Verbindung zwischen dem Shuttle und der Transporteinheit, um diese Transporteinheit bewegen zu können.

Die Länge des Shuttle entspricht dabei ungefähr der zu unterstützenden Länge der Transporteinheit. Dabei wird der wenigstens eine Shuttle unter die zu bewegende Transporteinheit gefahren. Anschließend wird die Koppeleinrichtungen des Shuttle betätigt, so dass die Transporteinheit immer waagrecht ausgerichtet bleibt. Denn die Transporteinheit steht ausgangsmäßig auf einer Plattform, von der sie fortbewegt werden soll. In dieser Koppelposition kann dann der Shuttle zusammen mit der Transporteinheit zu einer zweiten Position verfahren werden. Dort erfolgt die Entkopplung, so dass sich die Transporteinheit auf der entsprechenden Platform befindet und der Shuttle für weitere Einsatzzwecke zur Verfügung steht.

Der besondere Vorteil des - wenigstens einen - Shuttles besteht zum einen darin, dass dieser schmal ausgebildet werden kann. Indem dieser Shuttle als länglicher Verfahrwagen ausgebildet ist, gewährleistet er eine ausreichende Unterstützung der Transporteinheit bei ihrer Transportfahrt. Zum anderen ist es Sinn und Zweck, dass nach Erreichen der Endposition die Transporteinheit auf einer wie auch immer gearteten Abstellfläche positioniert wird. Da der Shuttle in diese Abstellfläche gewissermaßen eintaucht, bleibt aufgrund der schmalen Bauweise des Shuttle genügend Platz für eine ausreichende Auflagefläche für die Transporteinheit. Dadurch sind mit dem Shuttlesystem zum effizienten Bewegen von Transporteinheiten die entsprechenden Normen eingehalten, indem sie die Last aufnehmen, transportieren und schließlich wieder ablegen.

Das Shuttlesystem kann mit einer stabilen Energieversorgung oder im Speicherbetrieb arbeiten. Dies macht es vor allem in Hochregallagern einsetzbar. Die Aufteilung der Transport-einheit auf mehrere Shuttles ist insbesondere dann notwendig, wenn die Vorschriften eine Mindestunterlage für die Transporteinheiten vorschreiben oder wenn die Stabilität der Ladeeinheit sonst nicht gewährleistet ist. Dadurch ist es auch möglich, mit dem Shuttlesystem die Transporteinheit direkt an einen Förderer zu übergeben. Damit werden Ein- und Auslagerzeiten in einem Hochregallager wesentlich minimiert. Die Umschlagleistung kann in Zeiten hoher Belastung im Vergleich zu herkömmlichen Systemen mehr als verdoppelt werden.

Das Shuttlesystem ermöglicht somit Fördern, Heben, Einlagern, Transportieren und Auslagern von großen Transporteinheiten. Dadurch ist das Ein- und Auslagern in Hochregallagern möglich, verbunden mit einer sehr hohen Umschlagleistung. Weiterhin ist eine Redundanz gewährleistet, und zwar durch die Möglichkeit des ebenen Wechsels des gesamten Systems aus Verfahrwagen und Shuttle. Die Antriebstechnik auf den Lagerplätzen eines Hochregallagers entfällt. Es ist daher weniger Energieaufwand notwendig, da die Eigenlast gegenüber einem Regalbediengerät wesentlich geringer ist.

Das Shuttlesystem zeichnet sich somit dadurch aus, dass die Transporteinheiten immer auf der erforderlichen Aufstandsfläche stehen. Die Shuttles sind dafür konzipiert, eine eindimensionale Bewegung auszuführen. Vor allem haben die Shuttles die Fähigkeit zur Bildung von sogenannten Transportclustern im Sinne eines gemeinsamen Transportes von Ladungsträgern. Die Shuttles sind mechanisch unabhängig voneinander sowie unabhängig von einem zugeordneten Verfahrwagen sowie von der Fördertechnik. Als Übergabestellen können Rollenförderer sowie Fördereinrichtungen quer zur Fahrtrichtung der Shuttles dienen. Weiterhin ist eine Einfahrmöglichkeit der Shuttles in dem Sinne möglich, dass die Shuttles den Ladungsträger unterfahren, welcher beispielsweise zunächst auf Förderrollen steht. Gegebenenfalls ist auch eine Durchfahrmöglichkeit für die Shuttles realisierbar.

Eine Weiterbildung für eine erste Variante der Vorrichtung zum Bewegen von Transporteinheiten von einer ersten Position zu einer zweiten Position besteht darin, dass wenigstens zwei synchron zu betreibende Shuttle vorgesehen sind. Bei diesen Shuttlen handelt es sich dem Grund nach um längliche Verfahrwagen, welche sich jeweils durch ein eigenes Fahrgestell sowie durch eine oder mehrere Hubeinrichtungen auszeichnen. Diese Shuttle sind bezüglich ihrer Längserstreckung parallel zueinander beabstandet und bilden dabei mechanisch unabhängige Einheiten. Die Länge dieser Shuttle entspricht ungefähr der zu unterstützenden Länge der Transporteinheit. Dabei werden zwei oder mehr dieser Shuttle unter die zu bewegende Transporteinheit gefahren. Der Bewegungsablauf der Shuttle ist dabei völlig synchron. Anschließend werden synchron die Hubeinrichtungen der Shuttle betätigt, so dass die Transporteinheit immer waagrecht ausgerichtet angehoben wird. Denn die Transporteinheit steht ausgangsmäßig auf einer Plattform, von der sie fortbewegt werden soll. Nach dem Anheben der Transporteinheit kann diese dann durch synchrone Betätigung der Shuttle zu einer zweiten Position verfahren werden. Dort werden die Hubeinheiten der Shuttle wieder eingefahren, so dass die Transporteinheit auf der entsprechenden Platform abgesetzt wird.

Der besondere Vorteil bei der Verwendung von wenigstens zwei Shuttle besteht darin, dass diese zum einen schmal ausgebildet werden können, dass sie aber dennoch durch ihre Beabstandung die zu bewegende Transporteinheit stabil unterstützen. Beispielsweise können bei der Verwendung von zwei Shutteln diese in den beiden Randbereichen der Transporteinheit angeordnet sein. Bei der Verwendung von mehr als zwei Shutteln, beispielsweise von vier Shuttlen, könne diese mehr oder weniger gleichmäßig über die Breite der zu bewegenden Transporteinheit verteilt angeordnet sein, so dass hier eine gleichmäßige Unterstützung gegeben ist. Indem diese Shuttle als längliche Verfahrwagen ausgebildet sind, gewährleisten sie - wie ausgeführt - eine ausreichende Unterstützung der Transporteinheit bei ihrer Transportfahrt. Zum anderen ist es Sinn und Zweck, dass nach Erreichen der Endposition die Transporteinheit auf einer wie auch immer gearteten Abstellfläche positioniert wird. Da die Shuttle in diese Abstellfläche gewissermaßen eintauchen, bleibt aufgrund der schmalen Bauweise der Shuttle genügend Platz für eine ausreichende Auflagefläche für die Transporteinheit. Dadurch sind mit dem Shuttlesystem zum effizienten Bewegen von Transporteinheiten mit dem Einsatz von zwei oder mehr Shuttlen die entsprechenden Normen eingehalten, indem sie die Last gleichzeitig aufnehmen, transportieren und schließlich wieder ablegen. Das Shuttlesystem kann mit einer stabilen Energieversorgung oder im Speicherbetrieb arbeiten. Dies macht es vor allem in Hochregallagern einsetzbar. Die Aufteilung der Transporteinheit auf mehrere Shuttles ist insbesondere dann notwendig, wenn die Vorschriften eine Mindestunterlage für die Transporteinheiten vorschreiben oder wenn die Stabilität der Ladeeinheit sonst nicht gewährleistet ist. Dadurch ist es auch möglich, mit dem Shuttlesystem die Transporteinheit direkt an einen Förderer zu übergeben. Damit werden Ein- und Auslagerzeiten in einem Hochregallager wesentlich minimiert. Die Umschlagleistung kann in Zeiten hoher Belastung im Vergleich zu herkömmlichen Systemen mehr als verdoppelt werden.

Die Erfindungsidee des Shuttlesystems liegt somit im Fördern, Heben, Einlagern, Transportieren und Auslagern von großen Transporteinheiten mit mehreren, mechanisch nicht verbundenen Shuttles, welche in einem Shuttlesystem verschmolzen sind. Dadurch ist das Ein-und Auslagern in Hochregallagern möglich, verbunden mit einer sehr hohen Umschlagleistung. Weiterhin ist eine Redundanz gewährleistet, und zwar durch die Möglichkeit des ebenen Wechsels des gesamten Systems aus Verfahrwagen und Shuttle. Die Antriebstechnik auf den Lagerplätzen eines Hochregallagers entfällt. Es ist daher weniger Energieaufwand notwendig, da die Eigenlast gegenüber einem Regalbediengerät wesentlich geringer ist.

Das Shuttlesystem zeichnet sich somit dadurch aus, dass die Transporteinheiten immer auf der erforderlichen Aufstandsfläche stehen. Die Shuttles sind dafür konzipiert, eine eindimensionale Bewegung auszuführen. Vor allem haben die Shuttles die Fähigkeit zur Bildung von sogenannten Transportclustern im Sinne eines gemeinsamen Transportes von Ladungsträgern. Die Shuttles sind mechanisch unabhängig voneinander sowie unabhängig von einem zugeordneten Verfahrwagen sowie von der Fördertechnik. Als Übergabestellen können Rollenförderer sowie Fördereinrichtungen quer zur Fahrtrichtung der Shuttles dienen. Weiterhin ist eine Einfahrmöglichkeit der Shuttles in dem Sinne möglich, dass die Shuttles den Ladungsträger unterfahren, welcher beispielsweise zunächst auf Förderrollen steht. Gegebenenfalls ist auch eine Durchfahrmöglichkeit für die Shuttles realisierbar.

Die Shuttles sind mechanisch unabhängig voneinander ausgebildet. Dies bedeutet, dass die Shuttles nicht mechanisch miteinander verbunden sind, sondern eigenständige Fahreinheiten definieren, welche jedoch absolut synchron arbeiten.

Eine weitere bevorzugte Weiterbildung schlägt vor, dass bei mehr als zwei Shuttles nur ein Teil dieser Shuttles einsetzbar sind. Stehen beispielsweise bei dem Shuttlesystem vier Shuttles zur Verfügung, die zu transportierende Transporteinheit ist jedoch relativ schmal ausgebildet, so werden dann beispielsweise nur zwei Shuttles eingesetzt, während die beiden anderen Shuttles in ihrer Ruheposition verbleiben. Sobald aber eine breitere Transporteinheit bewegt werden soll, werden dann sämtliche Shuttles aktiviert, um der Transporteinheit die notwendige Unterstützung zu geben.

Für eine zweite Variante der Vorrichtung zum Bewegen von Transporteinheiten von einer ersten Position zu einer zweiten Position kann vorgesehen sein, dass - im Gegensatz zur ersten Variante - nur ein einziger Shuttle vorgesehen ist. Hier handelt es sich gleichermaßen um ein Shuttlesystem zum effizienten Bewegen von Transporteinheiten. Konkret betrifft dieses Shuttlesystem den Einsatz von einem Shuttle, welcher in eine Rollenbahn oder Kugelrollenbahn integriert ist. Es handelt sich somit um die Kombination von Shuttle mit Rollenbahn. Der Shuttle taucht dabei unter die auf einer Rollenbahn liegende Transporteinheit. Anschließend preßt sich mittels einer Steuerung des Shuttles ein Belag mit hoher Reibkraft gegen die Unterseite der Transporteinheit und erzeugt so eine Mitnahmekraft im Reibschluß. Die Transporteinheit liegt dabei während des Transportes sowohl auf den Rollen der Rollenbahn als auch auf dem Shuttle. Die höhere Mitnahmekraft des Belages aufgrund des Haftreibschlusses im Vergleich zur Rollreibung der Rollen ermöglicht einen Transport der Ladung mit geringem Kraftaufwand. Dieses Shuttlesystem kann mit stabiler Energieversorgung oder im Speicherbetrieb arbeiten. Besonders geeignet ist diese Lösung für den horizontalen Transport von Transporteinheiten über mehrere Plätze oder längere Förderlinien. Auch ein Kreuzen der Förderlinien ist mit diesem System möglich. Dabei werden die Förderrollen im Kreuzungsbereich durch Kugelrollen ersetzt. Die Shuttle kreuzen sich in ihren Kanälen und sind gegenseitig verriegelt.

Zum sukzessiven Verfahren und Vorwärtsbewegen von Transporteinheiten kann ferner eine Förderlinie geschaffen werden. Hierzu dient das Shuttlesystem zum effizienten Bewegen dieser Transporteinheiten. Der Vorteil des Shuttlesystems für diese Förderlinie besteht darin, dass unter Einhaltung der entsprechenden Normen die notwendige Unterstützung bei der Vorwärtsbewegung der Transporteinheiten gewährleistet ist, dass aber auch durch die längliche Ausbildung der Shuttles gewährleistet ist, dass die Transporteinheiten auf einer genügend dimensionierten Unterlage positioniert werden können.

Ausführungsbeispiele einer Vorrichtung zum Bewegen von Transporteinheiten von einer ersten Position zu einer zweiten Position in Verbindung mit einer Lagereinrichtung wird nachfolgend anhand der Zeichnungen beschrieben. In diesen zeigt:
- Fig. 1: eine perspektivische Ansicht eines Shuttlesystems mit Verfahrwagen und Shuttles;
- Fig. 2: eine schematische perspektivische Ansicht des Shuttlesystems mit aufgelagerter Transporteinheit;
- Fig. 3: einen Querschnitt durch das Shuttlesystem mit zwei Transporteinheiten, wobei eine Transporteinheit angehoben ist;
- Fig. 4a: einen Querschnitt durch das Shuttlesystem mit einer Transporteinheit im abgesenkten Zustand;
- Fig. 4b: einen Querschnitt durch das Shuttlesystem der Fig. 4a mit einer Transporteinheit im angehobenen Zustand;
- Fig. 5a: die Ebene 0 einer Lagereinrichtung;
- Fig. 5b: die Ebene 1 der Lagereinrichtung;
- Fig. 5c: die Ebene 2/3 der Lagereinrichtung;
- Fig. 6a: eine alternative Variante des Shuttlesystems in der abgesenkten Position des Shuttles;
- Fig. 6b: eine Darstellung entsprechend der in Fig. 6a, wobei jedoch die Reibeinrichtung des Shuttles an die Unterseite der Transporteinheit mit hoher Haftreibung zur Mitnahme angedrückt ist.

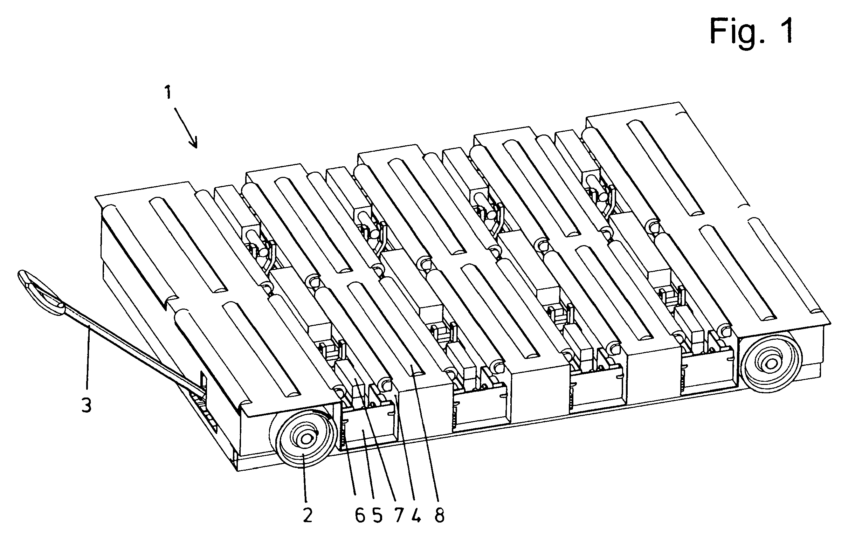

Das Shuttlesystem der Fig. 1 bis 5 weist einen Verfahrwagen 1 auf. Dieser ist mit Rollen 2 ausgestattet, so dass er auf einer Verfahrbahn verfahrbar ist. Der Antrieb erfolgt dabei elektrisch und ist rechnergesteuert. Die im Ausführungsbeispiel gezeigte Handdeichsel 3 dient nur für Notfälle, wenn ein Transport von Hand notwendig ist.

Wesentlich bei diesem Verfahrwagen 1 ist, dass er insgesamt vier Fahrrinnen 4 aufweist. Diese sind bezüglich der Verfahrrichtung des Verfahrwagens 1 senkrecht ausgerichtet. In diesen Fahrrinnen 4 befindet sich jeweils ein Shuttle 5. Hier handelt es sich jeweils um einen länglichen Verfahrwagen. Die Shuttle 5 weisen dabei jeweils ein eigenes Fahrgestell 6 sowie eine Hubeinrichtung 7 auf. Die Energieversorgung der Shuttle 5 erfolgt dabei über den Verfahrwagen 1.

Schließlich weist der Verfahrwagen 1 oberseitig noch Rollen 8 zwischen den Fahrrinnen 4 auf.

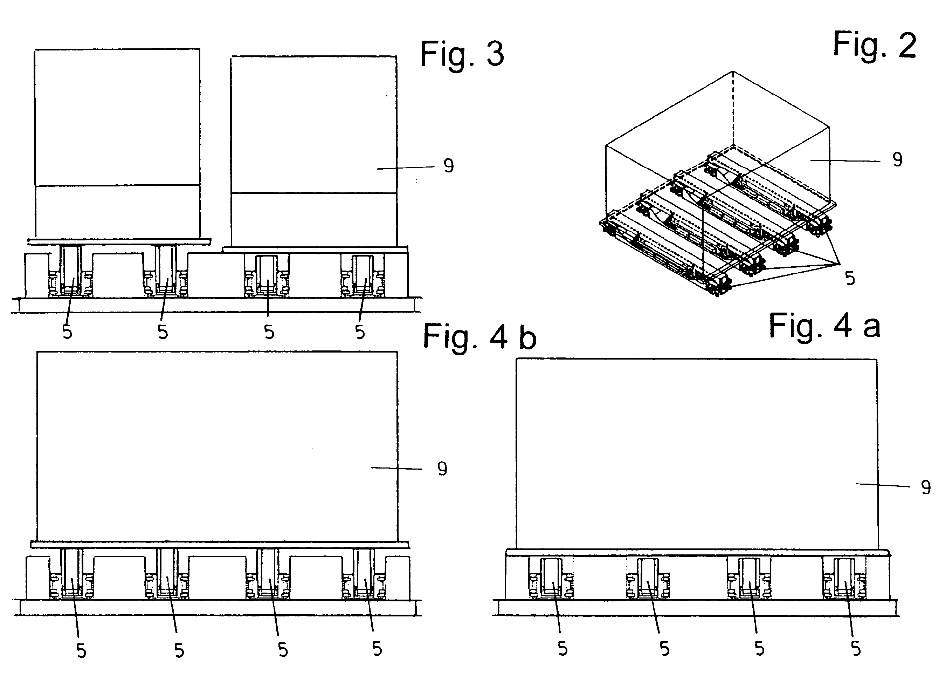

Fig. 2 zeigt, wie vier Shuttle 5, welche aus dem Verfahrwagen 1 ausgefahren sind, eine Transporteinheit 9 aufnehmen. In diese Position können die Shuttle 5 die Transporteinheit 9 von einer ersten Position zu einer zweiten Position bewegen.

Fig. 3 zeigt die Situation mit zwei Transporteinheiten 9, welche relativ schmal ausgebildet sind. Diese beiden Transporteinheiten befinden sich jeweils auf einem Shuttle-Paar 5. In der Zeichnung rechts ist angedeutet, dass die Hubeinrichtungen 7 der Shuttle 5 nicht ausgefahren sind, so dass die entsprechende Transporteinheit 9 aufliegt. Bei der linken Transporteinheit 9 ist dargestellt, dass die Hubeinrichtung 7 nach oben ausgefahren ist, so dass die Transporteinheit 9 entsprechend angehoben ist. In dieser Position kann diese linke Transporteinheit 9 mittels der beiden Shuttle 5 transportiert werden.

Fig. 4a zeigt eine Transporteinheit 9, welche in etwa doppelt so breit wie die beiden Transporteinheiten 9 der Fig. 3 ausgebildet ist. Dies bedeutet, dass diese breite Transporteinheit 9 sämtliche vier Shuttle 5 belegt. In Fig. 4b ist dargestellt, dass die Hubeinrichtungen 7 dieser vier Shuttle 5 ausgefahren sind, so dass die Transporteinheit 9 angehoben ist und so verfahren werden kann.

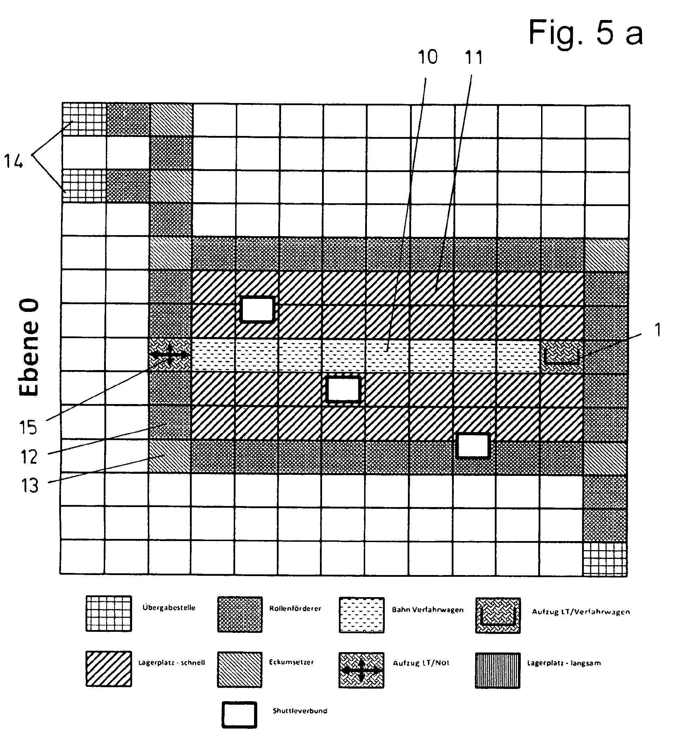

In den Fig. 5a bis 5c ist eine spezielle Lagereinrichtung unter Verwendung des vorbeschriebenen Shuttlesystems dargestellt.

Fig. 5a zeigt dabei die Ebene 0, welche die Hauptebene definiert. Diese weist zunächst eine zentrale Verfahrbahn 10 auf. Auf dieser ist der Verfahrwagen 1 der Fig. 1 verfahrbar.

Beidseits dieser Verfahrbahn 10 sind - in diesem Ausführungsbeispiel - zwei Reihen von Lagerplätzen 11 für Transporteinheiten 9 vorgesehen.

Umgeben sind diese Lagerplätze 11 von Förderbahnen 12 in Form von Rollenförderern. In den Eckbereichen befinden sich Eckumsetzer 13. Dieses Förderbahnen 12 sind noch Übergabestellen 14 zugeordnet.

Die Funktionsweise dieser Lagereinrichtung der Ebene 0 ist wie folgt:
Eine Transporteinheit 9 wird der Übergabestelle 14 aufgegeben. Von dort aus bestehen zwei Möglichkeiten, die Transporteinheit 9 einem bestimmten Lagerplatz 11 zuzuführen.

Die erste Möglichkeit besteht darin, dass die Transporteinheit 9 nach Durchlaufen der Förderbahnen 12 und der Eckumsetzer 13 in der Längsfortsetzung der Verfahrbahn 10 auf der Förderbahn 12 plaziert wird. Von dort aus nimmt der Verfahrwagen 1 die Transporteinheit 9 auf. Der Verfahrwagen 1 mit seiner dann darauf befindlichen Transporteinheit 9 fährt anschließend längs der Verfahrbahn 10 an eine bestimmte Stelle. Dort werden dann die Shuttle 5 aktiv, indem sie zunächst die Transporteinheit 9 anheben, senkrecht zur Verfahrbahn 10 verfahren und die Transporteinheit 9 an dem vorbestimmten Lagerplatz 11 absetzen. Anschließend fahren die Shuttle 5 wieder zurück zu ihrem Verfahrwagen 1 und können einen neuen Transport durchführen.

Die zweite Möglichkeit besteht darin, dass die Transporteinheit 9 auf die umgebende Förderbahn 12 aufgegeben wird, und zwar in dem Bereich, welcher sich parallel zur Verfahrbahn 10 erstreckt. Hat dort die Transporteinheit 9 eine bestimmte Position eingenommen, fährt der Verfahrwagen 1 mit seinen Shuttle 5 längs der Verfahrbahn 10 an die korrespondierende Position. Dort fahren die Shuttle 5 aus, übernehmen auf die vorbeschriebene Weise die Transporteinheit 9 von der Förderbahn 12 und setzen die Transporteinheit 9 auf einem vorbestimmten Lagerplatz 11 ab. Die Förderbahn 12 weist hierzu quer verlaufende Rinnen auf, in welche die Shuttle 5 einfahren können, so dass sie sich unterhalb der zu bewegenden Transporteinheit 9 befinden. Diese Situation ist in Fig. 5a durch das Kästchen "Shuttleverbund" rechts unten angedeutet.

Auf diese Weise ist es möglich, die Ebene 0 mit ihren Lagerplätzen 11 mit entsprechenden Transporteinheiten 9 zu belegen. Das Ausschleusen der Transporteinheit 9 erfolgt auf umgekehrte Art und Weise.

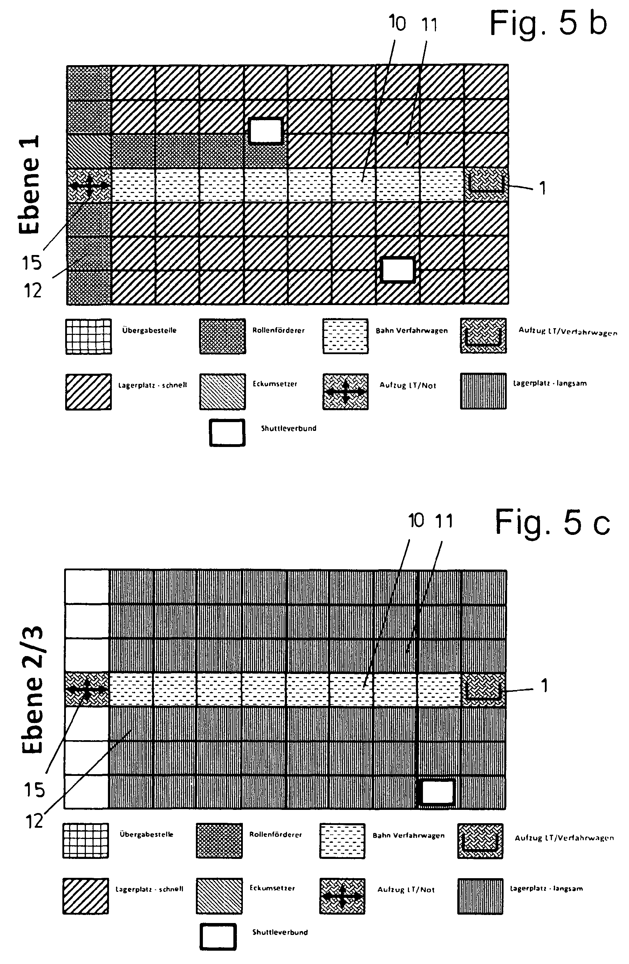

Oberhalb der Ebene 0 befindet sich die Ebene 1 der Fig. 5b. Diese Ebene 1 ist über einen Vertikalförderer 15 mit der Ebene 0 verbunden. Dies bedeutet, dass die auf dem Verfahrwagen 1 befindliche Transporteinheit 9 von der Ebene 0 auf die höherliegende Ebene 1 transportiert werden kann (und umgekehrt). Von dort aus kann dann auf dieser Ebene 1 eine entsprechende Belegung des gewünschten Lagerplatzes 1 mit der Transporteinheit 9 durchgeführt werden.

Fig. 5c zeigt dann noch die Ebene 2/3. Hier kann eine entsprechende Belegung der Lagerplätze 11 durchgeführt werden, nachdem mit dem Vertikalförderer 15 die Verfahrwagen 1 mit ihrer Transporteinheit 9 entsprechend nach oben bewegt worden sind. Auch hier erfolgt die Belegung der Lagerplätze 11 entsprechend. Aufgrund der Vertikalverfahrung der Transporteinheiten 9 ist hier die Belegung der Lagerplätze 11 etwas langsamer.

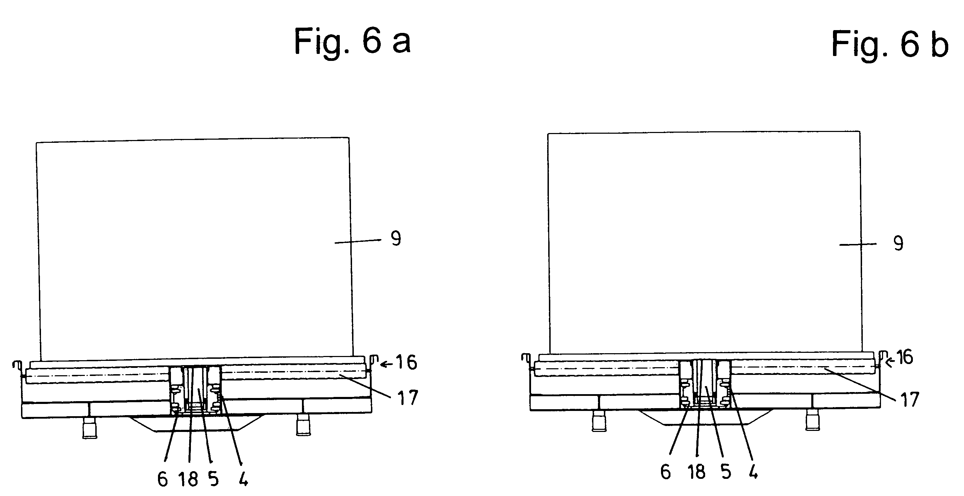

Die Fig. 6a und 6b zeigen eine zweite Variante des Shuttlesystems zum effizienten Bewegen von Transporteinheiten 9. Diese Variante ist in einer Rollenbahn 16 integriert. Diese Rollenbahn 16 definiert eine Fahrrinne 4, in welcher der Shuttle 5 verfahrbar ist. Beidseits dieser Fahrrinne 4 befinden sich die Rollen 17 der Rollenbahn 16.

Der Shuttle 5 dieser Variante zeichnet sich dadurch aus, dass er oberseitig ein oder mehrere Reibschlußeinrichtungen 18 aufweist. Diese besitzen eine hohe Haftreibungskraft, wenn sie in Anlage an die Unterseite der Transporteinheit 9 gelangen.

Die Funktionsweise ist wie folgt:

In Fig. 6a ist die Situation dargestellt, wenn die Transporteinheit 9 auf den Rollen 17 der Rollenbahn 16 aufliegt. Der oder die Reibschlußeinrichtungen 18 des Shuttles 5 sind dabei abgesenkt und stehen nicht in Kontakt mit der Unterseite der Transporteinheit 9. In dieser Position kann der Shuttle 5 in seiner Fahrrinne 4 verfahren und unterhalb der zu bewegenden Transporteinheit 9 bewegt werden.

Für den Transport wird die Reibschlußeinrichtung 18 des Shuttles 5 nach oben verfahren, so dass der Reibbelag an der Unterseite der Transporteinheit 9 mit hoher Haftreibung anliegt. In dieser Situation liegt die Transporteinheit 9 sowohl auf den Rollen 17 der Rollenbahn 16 als auch auf der Reibschlußeinrichtung 18 des Shuttles 5 auf. Aufgrund der hohen Haftreibungskraft wird beim Bewegen des Shuttles 5 in seiner Fahrrinne 4 die Transporteinheit 9 entsprechend mitgenommen, bis die entsprechende Position erreicht ist. Hier wird dann die Reibschlußeinrichtung 18 wieder nach unten verfahren und damit die Reibschlußeinrichtung 18 von der Unterseite der Transporteinheit 9 entkoppelt. In dieser Position kann dann der Shuttle 5 wieder in seiner Fahrrinne 4 für eine neue Aufgabe verfahren werden.

### Bezugszeichenliste

- 1: Verfahrwagen
- 2: Rollen
- 3: Handdeichsel
- 4: Fahrrinne
- 5: Shuttle
- 6: Fahrgestell
- 7: Hubeinrichtung
- 8: Rolle
- 9: Transporteinheit
- 10: Verfahrbahn
- 11: Lagerplatz
- 12: Förderstrecke
- 13: Eckumsetzer
- 14: Übergabestelle
- 15: Vertikalförderer
- 16: Rollenbahn
- 17: Rollen
- 18: Reibschlußeinrichtung

## Patentansprüche

1. Lagereinrichtung zum Lagern einer Mehrzahl von Transporteinheiten (9) auf Lagerplätzen (11)
mit wenigstens einem Verfahrwagen zum Bewegen der Transporteinheiten (9) von einer ersten Position zu einer zweiten Position, der wenigstens zwei U-förmige Fahrrinnen (4) aufweist, in die je ein Shuttle (5) verfahrbar anordenbar ist, wobei die Shuttles (5) mechanisch unabhängig voneinander sind, und wobei der Verfahrwagen (1) mit den Shuttles (5) längs einer Verfahrbahn (10) verfahrbar ist,
- dass entweder auf der einen Seite der Verfahrbahn (10) oder auf beiden Seiten der Verfahrbahn (10) jeweils eine oder mehrere Reihen von Lagerplätzen (11) für die Transporteinheiten (9) vorgesehen sind, dass der Verfahrwagen (1) mit einer darauf befindlichen Transporteinheit (9) an eine bestimmte Position der Verfahrbahn (10) verfahrbar ist,
an dieser Position bei stehendem Verfahrwagen die Transporteinheit (9) mittels der Shuttles (5) quer zur Verfahrbahn (10) hin zum zugeordneten Lagerplatz (11) bewegbar und dort absetzbar ist und
- dass die wenigstens zwei Shuttles (5) anschließend für einen neuen Transport zu dem Verfahrwagen (1) zurückfahrbar sind,
- wobei zumindest an einer Stirnseite der Verfahrbahn (10) eine quer verlaufende Förderbahn (12) für die Transporteinheiten (9) mit einer Übergabestelle (14) für diese Transporteinheiten (9) vorgesehen ist, und
- wobei die Lagerplätze (11) zumindest teilweise von Förderbahnen (12) umgeben sind, auf denen die aufgegebenen Transporteinheiten (9) mittels der Shuttles (5) verfahrbar sind, und dass bei entsprechender Positionierung des Verfahrwagens (1) auf seiner Verfahrbahn (10) die Transporteinheiten (9) durch die Shuttles (5) von der Förderbahn (12) abholbar und auf dem bestimmten Lagerplatz (11) absetzbar sind.

2. Lagereinrichtung nach Anspruch 1, **dadurch gekennzeichnet, dass** die Shuttles (5) in der ersten Position unter die zu bewegende Transporteinheit (9) verfahrbar sind, wobei in dieser ersten Position die Shuttles (5) mittels einer im Shuttle (5) integrierten Einrichtung mit der Transporteinheit (9) koppelbar und anschließend zusammen mit der Transporteinheit (9) zu der zweiten Position bewegbar ist und
wobei nach Erreichen der zweiten Position die integrierten Einrichtung von der Transporteinheit (9) wieder entkoppelbar ist,
wobei in einer Ebene des Verfahrwagens Rollen (8, 17) zum verfahrbaren Auflagern der Transporteinheiten (9) vorgesehen sind.

3. Lagereinrichtung nach Anspruch 1 oder 2,
**dadurch gekennzeichnet, dass**
die wenigstens zwei längliche, parallel zueinander beabstandete Shuttle (5) vorgesehen sind, dass die Shuttle (5) in der ersten Position synchron unter die zu bewegende Transporteinheit (9) verfahrbar sind, dass in dieser ersten Position die Transporteinheit (9) durch integrierte, synchronisierte Hubeinrichtungen (7) der Shuttle (5) synchron anhebbar und anschließend zusammen mit der darauf befindlichen Transporteinheit (9) synchron zu der zweiten Position bewegbar ist und dass nach Erreichen der zweiten Position die Hubeinrichtungen (7) wieder synchron absenkbar und die Transporteinheit (9) in dieser zweiten Position absetzbar ist.

4. Lagereinrichtung nach Anspruch 3,
**dadurch gekennzeichnet, dass**
bei mehr als zwei Shuttle (5) nur ein Teil dieser Shuttle (5) einsetzbar sind.

5. Lagereinrichtung nach zumindest einem der Ansprüche 1 bis 4,
**dadurch gekennzeichnet, dass**
der Shuttle (5) als integrierte Koppeleinrichtung eine Reibschlußeinrichtung (18) aufweist und dass diese Reibschlußeinrichtung (18) derart gegen die Unterseite der auf einer Rollenbahn (16) oder Kugelbahn aufliegenden Transporteinheit (9) preßbar ist, dass der Shuttle (5) bei seiner Vorwärtsbewegung die Transporteinheit (9) im Haftreibschluß mitnimmt.

6. Lagereinrichtung nach zumindest einem der Ansprüche 1 bis 5,
**dadurch gekennzeichnet, dass**
die Versorgung mit Energie sowie die Steuerung des wenigstens einen Shuttle (5) durch den Verfahrwagen (1) durchführbar ist.

7. Lagereinrichtung nach einem der Ansprüche 1 bis 6,
**dadurch gekennzeichnet, dass**
wenigstens zwei Ebenen vorgesehen sind, welche jeweils eine Verfahrbahn (10) für
einen Verfahrwagen (1) sowie zur Verfahrbahn (10) benachbarte Lagerplätze (11) aufweist, und dass die Ebenen über wenigstens einen Vertikalförderer (15) miteinander verbunden sind.

## Claims

1. A storage device for storing a plurality of transport units (9) on storage places (11),
with at least one traveling cart (1) for moving the transport units (9) from a first position to a second position, the traveling cart comprising at least two U-shaped traveling channels (4), wherein a shuttle (5) can be arranged in each of the traveling channels (4) such that it can be moved, wherein the shuttles (5) are mechanically independent of each other and wherein the traveling cart (1) including the shuttles (5) can be moved along a traveling track (10),
- that one or a plurality of storage places (11) for the transport units (9) are provided either on one side of the traveling track (10) or on each of the two sides of the traveling track (10), that the traveling cart (1) including a transport unit (9) disposed thereon can be moved to a specific position of the traveling track (10),
wherein, at this position and with the traveling cart being stopped, the transport unit (9) can be moved transversely in relation to the traveling track (10) by means of the shuttles (5) to the assigned storage place (11) and can be deposited there, and
- that the at least two shuttles (5) can subsequently be moved back to the traveling cart (1) for a new transport operation,
- wherein a transverse convening track (12) for the transport units (9) with a transfer point (14) for these transport units (9) is provided at least on a front end of the traveling track (10), and
- wherein the storage places (11) are surrounded by conveying tracks (12) at least in parts, wherein the delivered transport units (9) can be moved on said conveying tracks (12) by means of the shuttles (5), and that, when the traveling cart (1) is appropriately positioned on its traveling track (10), the transport units (9) can be picked up from the conveying track (12) and deposited on the specific storage place (11) by the shuttles (5).

2. The storage device according to Claim 1, **characterized in that** the shuttles (5), when being in the first position, can be moved under the transport unit (9) to be moved, wherein in this first position the shuttles (5) can be coupled to the transport unit (9) by means of a device incorporated in the shuttle (5) and subsequently be moved to the second position along with the transport unit (9), and
wherein the incorporated device can be uncoupled from the transport unit (9) again after the second position has been reached,
wherein rolls (8, 17) to support the transport units (9) in a moving manner are provided in a plane of the traveling cart.

3. The storage device according to Claim 1 or 2,
**characterized in that**
at least two elongated shuttles (5) that are spaced apart from each other in a parallel manner are provided, that the shuttles (5), when being in the first position, can be synchronously moved under the transport unit (9) to be moved, that in this first position the transport unit (9) can be synchronously lifted by incorporated synchronized lifting devices (7) of the shuttles (5) and subsequently be synchronously moved to the second position along with the transport unit (9) disposed on the shuttles (5) and that, after the second position has been reached, the lifting devices (7) can again be synchronously low-ered and the transport unit (9) can be deposited in this second position.

4. The storage device according to Claim 3,
**characterized in that**
if there are more shuttles (5) than two, only a part of these shuttles (5) can be used.

5. The storage device according to at least any one of Claims 1 to 4,
**characterized in that**
the shuttle (5) comprises a frictionally fitting device (18) acting as incorporated coupling device and that this frictional fitting device (18) can be pressed against the lower side of the transport unit (9) such that, in its forward movement, the shuttle (5) takes along the transport unit (9) in an adhesive frictional connection, said transport unit (9) being supported on a roller track (15) or a ball track.

6. The storage device according to at least any one of Claims 1 to 5,
**characterized in that**
the supply with energy and the control of the at least one shuttle (5) can be achieved by means of the traveling cart (1),

7. The storage device according to any one of Claims 1 to 6,
**characterized in that**
at least two levels are provided, each of which comprises a traveling track (10) for a traveling cart (1) as well as storage places (11) neighboring the traveling track (10), and that the levels are connected to each other via at least one vertical conveying device (15).

## Revendications

1. Dispositif de stockage pour le stockage d'une pluralité d'unités de transport (9) sur des emplacements de stockage (11) avec au moins un chariot mobile (1) permettant de déplacer les unités de transport (9) d'une première position à une deuxième position, lequel comporte au moins deux chenaux de roulement (4) en forme de U, qui permettent d'agencer respectivement une navette (5), les navettes étant mécaniquement indépendantes entre elles, et le chariot mobile (1) avec les navettes (5) pouvant être déplacé le long d'une voie de déplacement (10), de sorte
- que soient prévues sur un côté de la voie de déplacement (10) ou sur les deux côtés de la voie de déplacement (10) une ou plusieurs rangées d'emplacements de stockage (11) pour les unités de transport (9), que le chariot mobile (1) avec une unité de transport (9) déposée dessus soit déplaçable à une certaine position de la voie de déplacement (10),
qu'à cette position, lorsque le chariot mobile est immobile, l'unité de transport (9) soit déplaçable transversalement à la voie de déplacement (10) à l'aide des navettes (5) pour atteindre l'emplacement de stockage (11) affecté et qu'elle puisse être déposée à cet emplacement, et
- que les au moins deux navettes (5) puissent ensuite retourner au chariot mobile (1) pour un nouveau transport,
- une voie de convoyage (12) pour les unités de transport (9) avec un poste de transfert (14) pour ces unités de transport (9) étant prévue à au moins un côté frontal de la voie de déplacement (10), et
- les emplacements de stockage (11) étant au moins partiellement entourés de voies de convoyage (12), sur lesquelles les unités de transport (9) mises en circulation soient déplaçables à l'aide des navettes (5), et que, au positionnement correspondant du chariot mobile (1) sur sa voie de déplacement (10), les unités de transport (9) puissent être enlevées par les navettes (5) de la voie de convoyage (12) et déposées sur l'emplacement de stockage (11) déterminé.

2. Dispositif de stockage selon la revendication 1, **caractérisé en ce, qu'**en première position, les navettes (5) soient déplaçables jusque sous l'unité de transport (9) à déplacer, les navettes (5) pouvant être couplées dans cette première position avec l'unité de transport (9) à l'aide d'un dispositif intégré dans la navette (5) et les navettes pouvant être ensuite être déplacées avec l'unité de transport (9) couplée à la deuxième position et qu'après l'atteinte de la deuxième position, le dispositif intégré puisse à nouveau être découplé de l'unité de transport (9), des galets (8, 17) étant prévus sur un niveau du chariot mobile en tant que support déplaçable des unités de transport (9),

3. Dispositif de stockage selon la revendication 1 ou 2, **caractérisé en ce, que** les au moins deux navettes allongées (5) soient parallèles et espacées entre elles, que dans la première position les navettes (5) soient déplaçables de manière synchrone sous l'unité de transport (9) à déplacer, que dans cette première position l'unité de transport (9) puisse être soulevée par des dispositifs de levage synchronisés intégrés dans les navettes (5) et que ceux-ci soient ensuite déplaçables de manière synchrone, avec l'unité de transport (9) déposée, à la deuxième position et qu'après l'atteinte de la deuxième position, les dispositifs de levage (7) soient à nouveau rétractables de manière synchrone et que l'unité de transport (9) puisse être déposée dans cette deuxième position.

4. Dispositif de stockage selon la revendication 3, **caractérisé en ce, qu'**en cas de présence de plus de deux navettes (5), seule une partie de ces navettes (5) soit utilisable.

5. Dispositif de stockage selon au moins une des revendications 1 à 4, **caractérisé en ce, que** la navette (5) comporte un dispositif de liaison par friction (18) en tant que dispositif de couplage intégré et que ce dispositif de liaison par friction (18) puisse être pressé contre la partie inférieure d'une unité de transport (9) en position sur un train de galets (16) ou un train de billes de telle sorte, que la navette (5) entraîne l'unité de transport (9) par adhérence à friction lors de son déplacement vers l'avant.

6. Dispositif de stockage selon au moins une des revendications 1 à 5, **caractérisé en ce, que** l'approvisionnement en énergie ainsi que la commande de l'au moins une navette (5) puissent être assurés par le chariot mobile (1).

7. Dispositif de stockage selon l'une des revendications 1 à 6, **caractérisé en ce, que** soient prévus au moins deux niveaux, qui comportent respectivement une voie de déplacement (10) pour un chariot mobile (1) ainsi que des emplacements de stockage (11) voisins de la voie de déplacement (10), et que les niveaux soient liés ensemble par au moins un convoyeur vertical (15).
